# FASCICULE DE BREVET EUROPEEN

(11) **EP 1 242 168 B1**
(45) Date de publication et mention de la délivrance du brevet: **15.08.2012**
(21) Numéro de dépôt: 00988926.2
(22) Date de dépôt: 15.12.2000
(51) Int. Cl.: B01D 63/04, B01D 61/18

(54) **MODULE DE FILTRATION D'EAU A FIBRES CREUSES**
HOHLFASER-WASSERFILTRATIONSMODUL
WATER FILTERING MODULE WITH HOLLOW FIBRES

(30) Priorité: 16.12.1999 FR 9915863
(43) Date de publication de la demande: 25.09.2002
(73) Titulaire: Polymem, 31100 Toulouse (FR)
(72) Inventeur: ESPENAN, Jean-Michel, F-31450 Deyme (FR); SAUX, Franc, F-31570 Sainte Foy d'Aygrefeuille (FR)
(74) Mandataire: Santarelli
(86) Numéro de dépôt international: PCT/FR2000/003548
(87) Numéro de publication internationale: WO 2001/043856

(56) Documents cités:
- EP-A- 0 855 214
- EP-A- 0 947 237
- WO-A-96/07471
- US-A- 4 756 875
- PATENT ABSTRACTS OF JAPAN vol. 1997, no. 03, 31 mars 1997 (1997-03-31) -& JP 08 290043 A (NOK CORP), 5 novembre 1996 (1996-11-05) -& DATABASE WPI Derwent Publications Ltd., London, GB; AN 1997-028571 XP002167329
- PATENT ABSTRACTS OF JAPAN vol. 006, no. 019 (C-090), 3 février 1982 (1982-02-03) -& JP 56 141801 A (MITSUBISHI RAYON CO LTD;OTHERS: 01), 5 novembre 1981 (1981-11-05) -& DATABASE WPI Derwent Publications Ltd., London, GB; AN 1981-92223D XP002146694
- PATENT ABSTRACTS OF JAPAN vol. 016, no. 524 (C-1000), 28 octobre 1992 (1992-10-28) -& JP 04 197487 A (KOURIYUU KOUGIYOU KK), 17 juillet 1992 (1992-07-17) -& DATABASE WPI Derwent Publications Ltd., London, GB; AN 1992-288562 XP002146695
- PATENT ABSTRACTS OF JAPAN vol. 017, no. 042 (C-1020), 26 janvier 1993 (1993-01-26) -& JP 04 256424 A (NITTO DENKO CORP), 11 septembre 1992 (1992-09-11) -& DATABASE WPI Derwent Publications Ltd., London, GB; AN 1992-353902 XP002146696
- PATENT ABSTRACTS OF JAPAN vol. 1999, no. 10, 31 août 1999 (1999-08-31) -& JP 11 128692 A (TORAY IND INC;TORAY ENG CO LTD), 18 mai 1999 (1999-05-18) -& DATABASE WPI Derwent Publications Ltd., London, GB; AN 1999-351065 XP002146697

## Description

Le procédé objet de la présente invention est du domaine des dispositifs de filtration d'eau. Il concerne plus particulièrement le domaine des dispositifs de filtration par membrane, de type ultrafiltration.

On connaît de façon classique des modules comportant un ou plusieurs faisceaux de fibres creuses dans lesquels les fibres creuses sont allongées parallèlement les unes à côté des autres et empotées en leurs deux extrémités. Avec les deux extrémités empotées et coupées, les modules sont utilisés en filtration externe/interne ou inversement. Certains sont multi-faisceaux, ces faisceaux étant assemblés avec un empotage commun à tous les faisceaux. Lorsqu'ils sont utilisés en filtration externe/interne, des buses d'injection d'air sont disposées en bas de faisceaux en périphérie. Le document EP-0 655 418 révèle une installation de ce type.

On connaît également des modules comportant un ou plusieurs faisceaux de fibres creuses dont les extrémités sont empotées d'un côté, et libres mais fermées individuellement à l'autre extrémité. Avec une extrémité empotée, les fibres étant bouchées individuellement de l'autre côté mais non empotées. L'extrémité empotée est située en haut en fonctionnement. Ces modules sont utilisés en filtration externe/interne.

On peut encore citer des modules comportant des faisceaux de fibres creuses avec des fibres disposées en "U", la fibre étant pliée en partie basse.

Certains modules utilisent des faisceaux multiples arrangés dans un carter, avec une étanchéité mécanique faite autour de l'empotage en haut autour de chaque faisceau (généralement un joint torique). De l'air peut être injecté en bas du module.

Pour tous ces types de modules, les faisceaux sont soit directement empotés dans un carter, soit démontables du carter, l'étanchéité étant réalisée par des joints toriques autour de l'empotage.

Par ailleurs, on utilise aussi dans le domaine des dispositifs à membranes immergées notamment, des faisceaux qui ne sont pas logés dans un carter de pression, mais dans un bassin, le perméat étant récupéré par succion. Ces modules utilisent en général de l'air comprimé qui sert à agiter les faisceaux, que ce soit avec un faisceau vertical empoté aux deux extrémités avec des buses disposées autour du faisceau pour envoyer de l'air, ou encore avec un faisceau horizontal empoté aux deux extrémités et l'air étant injecté avec des moyens annexes en fond de bassin.

Ces différents dispositifs sont complexes, et onéreux. Ils posent par ailleurs des problèmes d'efficacité de fonctionnement, en particulier pour réaliser un bullage correct.

La présente invention a pour but de fournir un module d'ultra ou microfiltration simple qui permet de préférence de remédier à ces inconvénients.

L'invention vise à cet effet un module d'ultra ou microfiltration d'eau à fibres creuses selon la revendication 1 de type filtration de l'extérieur vers l'intérieur des fibres, l'eau à traiter étant introduite par le haut du module et l'eau traitée étant collectée en bas du module, caractérisé en ce que les fibres sont disposées à l'intérieur d'un carter en de multiples faisceaux dont la partie haute de chaque fibre est libre, en ce que le carter enveloppe les faisceaux de manière à les maintenir en position, et en ce qu'en bas du module, chaque faisceau est disposé dans un fourreau et empoté individuellement, les fourreaux venant ensuite se loger dans une platine de distribution.

La platine de distribution permet également l'injection d'air dans le module.

Selon un mode de réalisation préféré, les fibres sont disposées à l'intérieur d'un carter en de multiples faisceaux en forme de U, les branches du U étant disposées verticalement en utilisation avec la base du U en position haute dans le module. Chaque faisceau, et donc aussi chaque fibre est donc en forme de U renversé pendant son utilisation.

On comprend que cette mise en oeuvre permet une disposition en « U » multi faisceaux, la base du U des faisceaux étant disposée en haut. Elle permet également de réaliser un bullage efficace.

Par ailleurs, cette disposition autorise une utilisation du module en gravitaire immergé, avec notamment, la minimisation des volumes de nettoyages chimiques et la possibilité surtout en bioréacteur à membranes immergées de renvoyer le rejet du nettoyage chimique dans le bassin et ainsi le diluer et le traiter dans le bassin même.

On comprend également que cette disposition en « U » présentant son repliement en haut de module permet de condamner un faisceau défectueux.

On obtient également par cette disposition une grande facilité de fabrication d'un gros module.

Préférentiellement, tous les fourreaux sont reliés entre eux par la coulée (en position verticale inverse à celle du mode de filtration) d'une résine bi-composant dite résine d'empotage.

La platine de distribution est par exemple munie de canaux d'alimentation en air débouchant axialement entre les fourreaux. Ces canaux d'air peuvent être alimentés radialement à partir de la périphérie de la platine de distribution.

Dans une forme de réalisation préférée, le carter est fermé en partie haute de façon étanche par une platine de connexion présentant un alésage, par exemple taraudé, destiné au raccord d'une alimentation en eau à filtrer.

Avantageusement, le carter est aussi muni sur sa partie haute de trous de levage.

La description qui suit et le dessin annexé permettront de mieux comprendre les buts et avantages de l'invention. Il est clair que cette description est donnée à titre d'exemple et n'a pas de caractère limitatif. Dans le dessin :
Figure 1 montre schématiquement un dispositif de filtration d'eau selon l'invention, en coupe longitudinale selon la ligne de coupe I-I de la figure 2, et
Figure 2 montre la même installation en coupe transversale selon la ligne de coupe II-II de la figure 1.

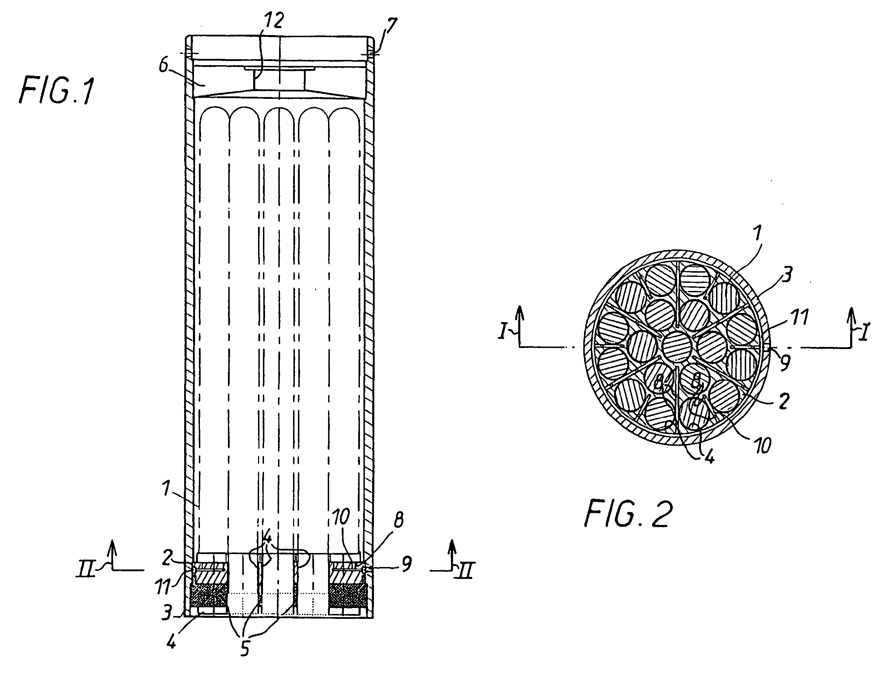

Tel que représenté sur la figure 1, le dispositif selon l'invention est un module d'ultra ou microfiltration à fibres creuses, de type filtration de l'extérieur vers l'intérieur des fibres avec ou sans rétrolavage. Il est destiné par exemple à être utilisé dans une installation de purification d'eau utilisant la différence de gravité comme source de pression pour le passage de l'eau à travers la paroi des membranes.

L'eau à traiter est introduite par le haut du module, l'eau traitée étant collectée en bas du module.

Les fibres sont disposées à l'intérieur d'un carter 3 en de multiples faisceaux 1 en forme de U, le module étant disposé verticalement en utilisation avec la base du U en position haute dans le module. Les fibres et faisceaux forment ainsi des U renversés.

Le carter 3 enveloppe les fibres creuses disposées en faisceaux 1 de manière à maintenir celles-ci dans la position décrite. Peu d'espace est laissé d'une part entre les faisceaux, ou les branches de ceux-ci, et d'autre part entre les faisceaux et le carter. Les fibres sont donc légèrement serrées les unes contre les autres pour assurer leur maintien et le carter 3 assure le maintien des fibres et faisceaux à la périphérie.

Le carter est réalisé à partir d'un tube cylindrique circulaire en polychlorure de vinyle (PVC). Il contient par exemple dix-neuf faisceaux 1 de fibres si l'on considère la forme de réalisation représentée au dessin. Son diamètre est alors d'environ 300mm pour une longueur d'environ 1000mm. Ces dimensions sont données uniquement à titre indicatif.

En bas du module, chaque faisceau 1 est disposé dans un fourreau 4 et empoté individuellement. Les fourreaux viennent ensuite se loger dans une platine de distribution 2.

Chaque fourreau 4 se présente par exemple sous la forme d'un manchon cylindrique circulaire. Les deux extrémités libres d'une même fibre repliée en U renversé sont à chaque fois dans un même fourreau. La platine de distribution 2 comporte des alésages traversant dont le diamètre intérieur correspond au diamètre extérieur des fourreaux 4. Une collerette est prévue à une extrémité de chaque fourreau, à l'extérieur, de manière à limiter le coulissement du fourreau 4 dans l'alésage correspondant et à permettre un bon positionnement du fourreau 4 par rapport à la platine de distribution 2.

Chaque fourreau est par exemple réalisé en polychlorure de vinyle (PVC). Dans l'exemple numérique précédent, on peut prévoir des fourreaux présentant un diamètre intérieur de 52mm et une hauteur d'environ 100mm.

Enfin, tous les fourreaux sont reliés entre eux par coulée (en position verticale inverse à celle du mode de filtration) d'une résine bi-composant dite résine d'empotage 5. Cette résine assure l'étanchéité entre la partie haute pression et la partie basse pression du dispositif de filtration.

On utilise également une résine d'empotage identique pour assurer dans les fourreaux 4 l'étanchéité entre les fibres d'un même faisceau 1.

De plus, la platine de distribution 2 est dotée de canaux 8 qui vont permettre le passage d'air introduit par un orifice latéral 9 en bas du module. Les canaux 8 sont orientés axialement et des passages radiaux 10 reliés à un passage périphérique 11 permettent leur alimentation en air depuis l'orifice latéral 9. Cet air est évacué sous forme de bulles ascendantes qui permettront de secouer les faisceaux pour améliorer l'élimination du gâteau de filtration formé sur les fibres.

En partie haute, le carter 3 est fermé par une platine de raccordement 6. Celle-ci est montée de façon étanche à l'extrémité opposée de la platine de distribution 2. Un alésage taraudé 12 réalisé au centre de cette platine de raccordement 6, permet le raccord d'un conduit (non représenté) d'alimentation en eau à traiter.

L'ensemble ainsi réalisé est un module de filtration dans lequel de l'eau à traiter est introduite en partie haute et de l'eau filtrée est récupérée en partie basse. Ce module étanche forme une unité de filtration. Le carter 3 permet, entre autres nombreuses fonctions, le guidage de l'eau à traiter. En délimitant un espace confiné autour des fibres, le carter 3 participe aux nombreux avantages du dispositif de filtration décrit plus haut.

Les avantages de cette conception sont en utilisation la disposition multi-faisceaux qui permet de minimiser les problèmes de mauvais accès à la surface de filtration et de difficulté de nettoyage des fibres.

On a en effet des espaces entre les faisceaux d'une part et au milieu de chaque faisceau d'autre part (grâce à la configuration en « U »).

De plus, de l'air peut être injecté entre les faisceaux, les bulles d'air s'écoulant principalement tangentiellement aux faisceaux.

La configuration de ce module permet :
a) de ne pas dévier le trajet des bulles d'air qui secouent les faisceaux,
b) de bien purger l'air du module notamment à la première mise en route mais aussi lorsque l'on effectue un bullage pendant la filtration,
c) de ne pas dévier le passage des débris de gâteau de filtration évacués soit par les bulles, soit par de l'eau de rétrolavage, soit par les deux,
d) de laisser, naturellement, aux alentours de la hauteur médiane, le faisceau faire un ventre ce qui améliore aussi les possibilités d'écoulement de l'extérieur vers l'intérieur du faisceau (sens de la filtration) ou inversement (sens du rétrolavage). Associé à l'air, on augmente donc la turbulence près des faisceaux, ce qui est favorable pour limiter le colmatage,
e) d'éviter un empotage (coûteux) à une extrémité, et
f) dans le cas d'une rupture de fibre, on peut après avoir identifié le faisceau défectueux, soit réparer (comme fait habituellement), soit condamner le faisceau incriminé par la mise en place d'une cape, par exemple collée sur l'extrémité du fourreau du faisceau.

On peut aussi travailler en filtration dite gravitaire (par gravité) en connectant la platine de raccordement 6 à l'eau à traiter en pression.

On peut encore fonctionner en mode «membranes immergées », la platine 6 n'étant pas raccordée. Dans ce cas particulier, on peut effectuer un nettoyage chimique en se limitant à remplir le module en solution de nettoyage par la platine de raccordement jusque en haut. On limite ainsi le volume de la solution de nettoyage au strict minimum, c'est à dire le volume du module.

La manutention est facilitée par la présence de trous de levage 7 en haut du module.

En fabrication la manipulation est aisée. Les faisceaux unitaires sont gainés d'une gaine souple en film élastique qui est utilisée pendant l'empotage unitaire des faisceaux et retirée lorsque le faisceau et son fourreau sont mis en place sur la platine de distribution.

Les faisceaux (leurs fourreaux en fait) sont mis en place sur la platine de distribution en position verticale, la base du U en bas, et ensuite l'ensemble formé par les faisceaux et la platine de distribution est introduit dans le carter. L'ensemble est alors empoté.

L'empotage est simplifié car même pour des gros modules (100 m² de surface filtrante et plus), il est inutile de réaliser l'empotage toujours complexe de plusieurs dizaines de milliers de fibres ensemble. Les empotages sont faits sur des petits faisceaux individuellement. Le test préalable de chacun des faisceaux permet d'éviter de prendre le risque de gâcher un carter et ses pièces périphériques à cause de quelques fibres endommagées.

La platine 6 de raccordement est ensuite collée (ou soudée) dans le carter 3.

L'alimentation en air est simple, sans mise en place de buses qui pourraient de plus endommager les faisceaux.

Il est à noter que l'un des avantages importants du dispositif selon l'invention est la possibilité d'injecter de l'air grâce à la platine de distribution 2 qui joue ainsi plusieurs rôles.

Par ailleurs, le rétrolavage (avec circulation d'eau en sens inverse dans les membranes pour les nettoyer) peut se faire avec de l'eau mais aussi avec de l'air lorsque le diamètre des pores est suffisant, par exemple dans le cas de microfiltration.

On comprend que la géométrie choisie pour le dispositif selon l'invention permet d'identifier facilement un faisceau défaillant : par exemple par injection d'air du côté eau brute, le module étant en position verticale inversée, de l'eau étant en place sur la platine de distribution 2, ce qui permet alors de voir buller le faisceau défaillant.

On peut alors envisager soit de boucher la ou les fibres défaillantes, par des moyens classiques connus de l'homme du métier, soit d'isoler le faisceau en entier de manière définitive par collage d'un bouchon par exemple, ou encore de manière réversible par bouchon démontable, en attendant alors de grouper plusieurs réparations à réaliser simultanément.

Le bouchage d'un ou plusieurs faisceaux de fibres ne perturbe en rien le fonctionnement de l'ensemble du module.

La portée de la présente invention ne se limite pas aux détails des formes de réalisation ci-dessus considérés à titre d'exemple, mais s'étend au contraire aux modifications à la portée de l'homme de l'art.

En variante par exemple, au lieu de faisceaux de fibres en "U", on peut utiliser des fibres dont la partie haute est bouchée, mais libre.

## Revendications

1. Module d'ultra ou microfiltration d'eau à fibres creuses, de type filtration de l'extérieur vers l'intérieur des fibres, comportant de multiples faisceaux empotés individuellement chacun dans un fourreau, les fourreaux venant ensuite se loger dans une platine de distribution (2) et les fibres assemblées en fourreau étant libres du côté opposé à la platine de distribution (2),
**caractérisé en ce que** les fibres sont disposées à l'intérieur d'un carter (3) qui enveloppe les faisceaux de manière à les maintenir en position, et **en ce que** la platine de distribution (2) permet l'injection d'air dans le module.

2. Module selon la revendication 1, **caractérisé en ce que** les fibres sont disposées dans chaque faisceau en forme de U, les extrémités des branches du U étant empotées dans un fourreau (4).

3. Module selon l'une des revendications 1 à 2, **caractérisé en ce que** tous les fourreaux sont reliés entre eux par une résine bi-composant, dite résine d'empotage (5).

4. Module selon l'une des revendications 1 à 3, **caractérisé en ce que** la platine de distribution est munie de canaux d'alimentation en air débouchant axialement entre les fourreaux.

5. Module selon la revendication 4, **caractérisé en ce que** les canaux d'air sont alimentés radialement à partir de la périphérie de la platine de distribution.

6. Module selon l'une des revendications 1 à 5, **caractérisé en ce que** le carter (3) est fermé du côté opposé à la platine de distribution (2) de manière étanche par une platine de connexion (6) présentant un alésage (12) destiné au raccord d'une alimentation en eau à filtrer.

7. Module selon la revendication 6, **caractérisé en ce que** l'alésage (12) destiné au raccord d'une alimentation en eau à filtrer est taraudé.

8. Module selon l'une des revendications 1 à 7, **caractérisé en ce que** le carter (3) est muni de trous (7) de levage du côté opposé à la platine de distribution (2).

## Claims

1. A module for ultrafiltration or microfiltration of water using hollow fibers, of the type with filtration from the exterior toward the interior of the fibers, comprising multiple bundles each potted individually in a sheath, the bundles then being accommodated in a distribution plate (2) and the fibers assembled into a sheath being free at the opposite end to the distribution plate (2),
**characterized in that** the fibers are disposed inside a casing (3) which envelops the bundles so as to hold them in position, and **in that** the distribution plate (2) enables air to be injected into the module.

2. A module according to claim 1, **characterized in that** the fibers are disposed in each bundle in a U-shape, the ends of the branches of the U-shape being potted in a sheath (4).

3. A module according to claim 1 or claim 2, **characterized in that** all the sheaths are connected together by a two-component potting resin (5).

4. A module according to one of claims 1 to 3, **characterized in that** the distribution plate is provided with air supply passages opening axially between the sheaths.

5. A module according to claim 4, **characterized in that** the air passages are fed radially from the periphery of the distribution plate.

6. A module according to one of claims 1 to 5, **characterized in that** the casing (3) is sealingly closed at the opposite end to the distribution plate (2) by a connection plate (6) having a bore (12) for connecting a supply of water to be filtered.

7. A module according to claim 6, **characterized in that** the bore (12) for connecting a supply of water to be filtered is threaded.

8. A module according to one of claims 1 to 7, **characterized in that** the casing (3) has lifting holes (7) at the opposite end to the distribution plate (2).

## Patentansprüche

1. Modul zur Ultra- oder Mikro-Hohlfaserfiltration von Wasser, wobei die Filtration vom Äußeren zum Inneren der Fasern hin erfolgt, umfassend mehrere Bündel, die jeweils einzeln in eine Hülse eingebettet sind, wobei die Hülsen anschließend in eine Verteilerplatine (2) eingefügt werden und die in der Hülse zusammengefassten Fasern an der Seite frei sind, die der Verteilerplatine (2) entgegengesetzt ist,
**dadurch gekennzeichnet, dass** die Fasern im Inneren eines Gehäuses (3) angeordnet sind, das die Fasern derart umgibt, dass sie in ihrer Position gehalten werden, und dass die Verteilerplatine (2) das Einspritzen von Luft in das Modul ermöglicht.

2. Modul nach Anspruch 1, **dadurch gekennzeichnet, dass** die Fasern in jedem Bündel U-förmig angeordnet sind, wobei die Enden der Äste des U in eine Hülse (4) eingebettet sind.

3. Modul nach einem der Ansprüche 1 bis 2, **dadurch gekennzeichnet, dass** alle Hülsen durch ein Zweikomponentenharz, genannt Vergussharz (5), miteinander verbunden sind.

4. Modul nach einem der Ansprüche 1 bis 3, **dadurch gekennzeichnet, dass** die Verteilerplatine mit Luftzufuhrkanälen versehen ist, die axial zwischen den Hülsen münden.

5. Modul nach Anspruch 4, **dadurch gekennzeichnet, dass** die Luftkanäle radial ausgehend vom Umfang der Verteilerplatine gespeist werden.

6. Modul nach einem der Ansprüche 1 bis 5, **dadurch gekennzeichnet, dass** das Gehäuse (3) an der der Verteilerplatine (2) entgegengesetzten Seite durch eine Verbindungsplatine (5) dicht verschlossen wird, die eine Bohrung (12) aufweist, die zum Anschluss einer Zufuhrleitung für das zu filternde Wasser bestimmt ist.

7. Modul nach Anspruch 6, **dadurch gekennzeichnet, dass** die Bohrung (12) zum Anschluss einer Zufuhrleitung für das zu filternde Wasser mit einem Gewinde versehen ist.

8. Modul nach einem der Ansprüche 1 bis 7, **dadurch gekennzeichnet, dass** das Gehäuse (3) an der der Verteilerplatine (2) entgegengesetzten Seite mit Hebeöffnungen (7) versehen ist.
